# EUROPÄISCHE PATENTSCHRIFT

(11) **EP 0 380 446 B1**
(45) Veröffentlichungstag und Bekanntmachung des Hinweises auf die Patenterteilung: **06.04.1994**
(21) Anmeldenummer: 90810041.5
(22) Anmeldetag: 19.01.1990
(51) Int. Cl.: B01F 15/02

(54) **Dosiereinrichtung zum Dosieren mindestens eines Schüttgutes**
Proportioning device for proportioning at least one bulk load
Dispositif de dosage pour doser au moins un produit en vrac

(30) Priorität: 25.01.1989 CH 217/89
(43) Veröffentlichungstag der Anmeldung: 01.08.1990
(73) Patentinhaber: K-TRON TECHNOLOGIES, INC., Wilmington, DE 19801 (US)
(72) Erfinder: Lehmann, Rolf, CH-5703 Seon (CH); Kaelin, Daniel P., CH-5000 Aarau (CH)
(74) Vertreter: Zbinden, Paul A.

(56) Entgegenhaltungen:
- CA-A- 1 175 378
- DE-A- 2 021 400
- DE-A- 2 160 750
- FR-A- 1 004 337
- FR-A- 1 005 403
- FR-A- 2 030 957
- FR-A- 2 586 170
- US-A- 2 481 860
- US-A- 3 179 272
- US-A- 3 717 272

## Beschreibung

Die Erfindung betrifft eine Dosiereinrichtung gemäss dem Oberbegriff des Anspruchs 1.

Dosiereinrichtungen zum Dosieren mindestens eines Schüttgutes werden unter anderem in der Kunststoff-Industrie bei kontinuierlichen und intermittierenden Fertigungsverfahren eingesetzt, bei welchen beispielsweise durch Extrudieren, Kalandrieren, Walzen und/oder Beschichten Stangen, Rohre, Bahnen, Folien, Platten und dergleichen und/oder durch Spritzgiessen Formteile hergestellt werden. Die Dosiereinrichtungen können bei solchen Verfahren verwendet werden, um Fertigungsmaschinen kontinuierlich oder chargenweise mindestens einen als Schüttgut vorliegenden Kunststoff oder Kunststoff-Bestandteil zuzuführen. Häufig werden mittels der Dosiereinrichtung gleichzeitig zwei oder mehr verschiedene Schüttgüter zur Fertigungsmaschine oder zu einer einer solchen vorgeschalteten, etwa ein Rührwerk aufweisenden Vorrichtung zugeführt und gemischt. Dabei kann beispielsweise ein Schüttgut das granulatförmige Grundmaterial des Kunststoffs bilden, dem dann mindestens ein ebenfalls als Schüttgut vorliegender Additiv beigemischt wird, der beispielsweise als Farbstoff oder zur Beeinflussung der Festigkeit oder sonstiger physikalischer oder chemischer Eigenschaften dient. Dem Dosieren und Mischen von Schüttgütern dienende Dosiereinrichtungen können jedoch statt für die Kunststoff-Verarbeitung auch bei der Herstellung von anderen Produkten, wie Düngern und Pflanzenschutzmitteln, sonstigen chemischen sowie pharmazeutischen Substanzen und Nahrungsmitteln verwendet werden. Die Dosierung kann volumetrisch oder gravimetrisch erfolgen. Bei der volumetrischen Dosierung werden die pro Zeiteinheit zugeführten Schüttgüter durch die Volumenförderleistungen von Förderorganen festgelegt, während bei der gravimetrischen Dosierung durch Wiegen der die Schüttgüter enthaltenden Gutspeicher die zeitlichen Abnahmen der in diesem vorhandenen Güter ermittelt und beispielsweise auf vorgegebene Sollwerte geregelt werden.

Eine aus der DE-A-28 38 110 bekannte Dosiereinrichtung zum Dosieren und Mischen von Schüttgütern besitzt für jedes zu dosierende Gut einen Gutspeicher, der in den Eingang eines horizontalen Förderkanals mündet, in welchem eine Förderschnecke angeordnet ist, um das vom Gutspeicher in den Eingang des Förderkanals gelangende Schüttgut zum Ausgang des Förderkanals zu fördern. Die Ausgänge der Förderkanäle sind durch von ihnen weg nach unten geneigte, aus Rohrleitungen bestehende Rutschkanäle mit einem Sammel-Einlauf eines Kunststoff-Extruders verbunden.

Beim Betrieb mehr oder weniger ähnlich ausgebildeter, auf dem Markt bekannter Dosiereinrichtungen ist es üblich, von Zeit zu Zeit - insbesondere nach Änderungen der zu dosierenden Schüttgüter und/oder der beim Dosieren pro Zeiteinheit zuzuführenden Gutmengen - Proben der dosierten Schüttgüter in besondere Probebehälter einzuleiten, um beispielsweise zu kontrollieren, ob die Dosiervorgänge in der vorgesehenen Weise ablaufen und ob die pro Zeiteinheit zugeführten Schüttgutmengen die vorgesehenen Sollwerte haben. Um bei den bekannten Dosiereinrichtungen solche Proben entnehmen zu können, muss jeweils mindestens ein beim normalen Betrieb am Förderkanal und/oder am Sammel-Einlauf befestigtes, einer der erwähnten Rohrleitungen der Einrichtung gemäss der DE-A-28 38 110 entsprechendes Schüttgut-Leitelement demontiert und durch einen speziell für die Probeentnahme ausgebildeten Rutschkanal ersetzt werden. Die Bereitstellung und Aufbewahrung speziell für die Probeentnahme ausgebildeter Rutschkanäle verteuert jedoch die Dosiereinrichtungen und verursacht vor allem eine Komplikation und Verteuerung des Betriebes der Dosiereinrichtungen. Dies unter anderem deshalb, weil ja die Probeentnahme-Rutschkanäle während des normalen Betriebes irgendwo aufbewahrt, für die Probeentnahme zur Verwendungsstelle gebracht und danach wieder weggeräumt werden müssen. Bei gravimetrischer Dosierung kann zudem das Ersetzen von beim normalen Betrieb vorhandenen Schüttgut-Leitelementen durch anders ausgebildete Probeentnahme-Rutschkanäle störende Änderungen des Tara-Gewichts verursachen. Das für Probeentnahmen erforderliche Ersetzen von beim normalen Betrieb vorhandenen Schüttgut-Leitelementen durch speziell ausgebildete Probeentnahme-Rutschkanäle bringt daher erhebliche Nachteile mit sich.

Bei jedem Wechsel der zu dosierenden Schüttgüter und zum Reinigen der Gutspeicher müssen diese jeweils entleert werden. Bei bekannten Einrichtungen geschieht dies zum Teil dadurch, dass die Förderorgane mit der maximal möglichen Geschwindigkeit angetrieben werden, bis der betreffende Gutspeicher entleert ist. Dieses Entleerungsverfahren hat jedoch die Nachteile, dass es verhältnismässig viel Zeit beansprucht und dass - analog wie bei der Probeentnahme - mindestens ein beim normalen Betrieb vorhandenes Schüttgut-Leitelement durch einen speziell für die Entleerung ausgebildeten Rutschkanal ersetzt werden muss, um das beim Entleeren zum Ausgang des Förderkanals geförderte Gut statt zum Sammel-Einlauf des Extruders zu einem Behälter zu leiten. Es ist ferner bekannt zum Entleeren eines Gutspeichers den an diesem befestigten Förderkanal vom Gutspeicher zu demontieren und unmittelbar beim Auslass des Gutspeichers einen speziell ausgebildeten Entleerungs-Rutschkanal zu befestigen. Auch bei dieser Variante ist jedoch für die Entleerung der besonders ausgebildete Rutschkanal erforderlich. Ferner kann dann bereits während der zum Ersetzen des Förderkanals durch einen Entleerungs-Rutschkanal dienenden Zeitdauer Gut aus dem Gutspeicher hinaus gelangen. Auch die bei den bekannten Dosiereinrichtungen für die Entleerung der Gutspeicher vorhandenen Mittel haben daher verschiedene Nachteile. Zudem ist es bei den bekannten Dosiereinrichtungen häufig mühsam und zeitraubend, ein etwa aus einer Förderschnecke bestehendes Förderorgan aus dem Förderkanal herauszunehmen und/oder in diesen einzusetzen, wodurch die Reinigung des Förderkanals sowie des Förderorgans und das Auswechseln des letzteren erschwert werden.

Aus der CA-A-1 202 591 ist eine Einrichtung zum Austragen von zwei Schüttgütern, nämlich einem Saatgut und einem Düngemittel, bekannt. Die Einrichtung weist zwei Gutspeicherbehälter auf. In jedem Behälter ist ein als Förderkanal dienendes, geneigtes Rohr mit einer Förderschnecke angeordnet. Das obere, aus dem Behälter herausragende Ende jedes Rohrs ist mit einem Auslauf verbunden, der ein flexibles, an das Rohr angeschlossenes, gemäss der Zeichnung faltenbalgartiges Schlauchstück und ein gerades Teleskop-Rohr aufweist. Jeder Gutspeicherbehälter hat an seinem unteren Ende eine Entleerungsöffnung, die mit einem Schieber abgeschlossen ist.

Die bekannte Einrichtung ermöglicht zwar, die Richtung des Auslaufs durch Biegen des Schlauchstückes zu ändern. Ein faltenbalgartiges Schlauchstück kann jedoch das Hindurchrutschen eines Schüttgutes, insbesondere wenn das Schlauchstück stark gebogen ist, beträchtlich behindern. Ein Schlauchstück, das zum Ändern der Auslaufrichtung jeweils gebogen werden muss, wird ferner bei der Benutzung schnell abgenutzt und muss daher nach relativ kurzer Benutzungszeit ersetzt werden. Die aus einem biegbaren, faltenbalgartigen Schlauchstück und einem Teleskoprohr bestehenden Ausläufe sind zudem teuer in der Herstellung und schwer reinigbar. Da jedes der einen Förderkanal bildenden Rohre im Innern von einem der Gutspeicherbehälter angeordnet ist, muss das Gut zur Entnahme aus dem Behälter von dessen unterem Endbereich bis über den Behälter hinauf gefördert werden, was eine lange sowie teure Förderschnecke erforderlich macht und beim Betrieb viel Energie verbraucht. Des weitern ist mit einer im Innern des Behälters angeordneten Förderschnecke kaum eine vollständige Entleerung des Behälters möglich, so dass dieser bei seinem untern Ende noch eine verschliesssbare Entleerungsöffnung haben muss, wie es in der CA-A-1 202 591 ja auch offenbart ist. Da sich die oberen Enden der Förderkanäle oberhalb der Behälter befinden, wäre es zudem praktisch nicht möglich, die Behälter derart oberhalb einer zum Weiterverarbeiten des Schüttgutes dienenden Maschine anzuordnen, dass sich die Behälter mindestens zum Teil über dem von der Maschine eingenommenen Grundrissbereich befinden. Die Gutspeicherbehälter müssten daher, insbesondere wenn mehr als zwei solche vorgesehen würden, einen verhältnismässig grossen Abstand von der Achse des Sammel-Einlaufs haben und würden dementsprechend zusammen mit der Maschine zum Weiterverarbeiten des Schüttgutes im Grundriss viel Platz benötigen.

Im übrigen sind sowohl bei der aus der DE-A-28 38 110 als auch bei der aus der CA-A-1 202 591 bekannten Einrichtung keine Mittel zum Wägen der Gutspeicherbehälter vorhanden, so dass diese Einrichtung auch keine gravimetrische Dosierung ermöglicht.

Der Erfindung liegt daher die Aufgabe zugrunde eine vorzugsweise das gleichzeitige Dosieren und Mischen von zwei oder mehr Schüttgütern erlaubende Dosiereinrichtung zu schaffen, die die Nachteile der bekannten Dosiereinrichtungen ausschaltet und insbesondere ermöglicht, rasch und einfach Gutspeicher-Entleerungen durchführen zu können, wobei die Dosiereinrichtung im Grundriss möglichst wenig Platz beanspruchen und auch wirtschaftlich herstellbar sein soll.

Die Aufgabe wird ausgehend vom aus der DE-A-28 38 110 bekannten Stand der Technik erfindungsgemäss durch eine Dosiereinrichtung mit den Merkmalen des Anspruchs 1 gelöst. Vorteilhafte Ausgestaltungen der Dosiereinrichtung ergeben sich aus den abhängigen Ansprüchen.

Der Erfindungsgegenstand wird nun anhand eines in der Zeichnung dargestellten Ausführungsbeispiels und Varianten von diesem näher erläutert. In der Zeichnung zeigt
die Figur 1 eine perspektivische Ansicht einer Dosiereinrichtung zum Dosieren und Mischen von Schüttgütern,
die Figur 2 eine etwas schematisierte, perspektivische Ansicht des Unterteils eines einzelnen Gutspeichers mit dem dazu gehörenden Förderkanal sowie Rutschkanal, wobei die beiden Kanäle aufgebrochen und eine Verschalungsplatte des Gutspeicher-Unterteils sowie die Einhängeelemente des Rutschkanals weggelassen wurden,
die Figur 3 eine Seitenansicht eines Förderkanals,
die Figur 4 einen Querschnitt durch einen Förderkanal entlang der Linie IV - IV der Figur 3,
die Figur 5 einen Längsschnitt durch einen Rutschkanal,
die Figur 6 einen Querschnitt durch einen Rutschkanal entlang der Linie VI - VI der Figur 5,
die Figur 7 einen Längsschnitt durch Abschnitte eines Förderkanals und eines in seiner Arbeitsstellung am Förderkanal aufgehängten Rutschkanals,
die Figur 8 einen Längsschnitt durch das verschiebbar im Förderkanal geführte Absperrorgan, in grösserem Massstab als die Figuren 3 sowie 4,
die Figur 9 einen Querschnitt durch das Absperrorgan,
die Figur 10 eine Draufsicht auf einen am oberen Ende eines Förderkanals angeordneten, zum Halten eines Förderorgans dienenden Supports, wobei die den Support abdeckende Abdeckhaube weggelassen wurde und von den auf der dem Betrachter zugewandten Supportseite vorhandenen Zahnrädern nur strichpunktiert die Wälzkreise angedeutet wurden,
die Figur 11 eine teils im Axialschnitt und teils in Ansicht gezeichnete Darstellung eines Förderorgans und der zu seiner Lagerung dienenden Lagervorrichtung,
die Figur 12 eine schematische Darstellung eines Gutspeichers mit dem Förderkanal und dem sich in der Arbeitsstellung befindenden Rutschkanal,
die Figur 13 eine der Figur 12 entsprechende Darstellung, aber mit sich in der Probeentnahmestellung befindendem Rutschkanal und
die Figur 14 eine der Figur 12 entsprechende Darstellung, aber mit sich in der Entleerungsstellung befindendem Rutschkanal.

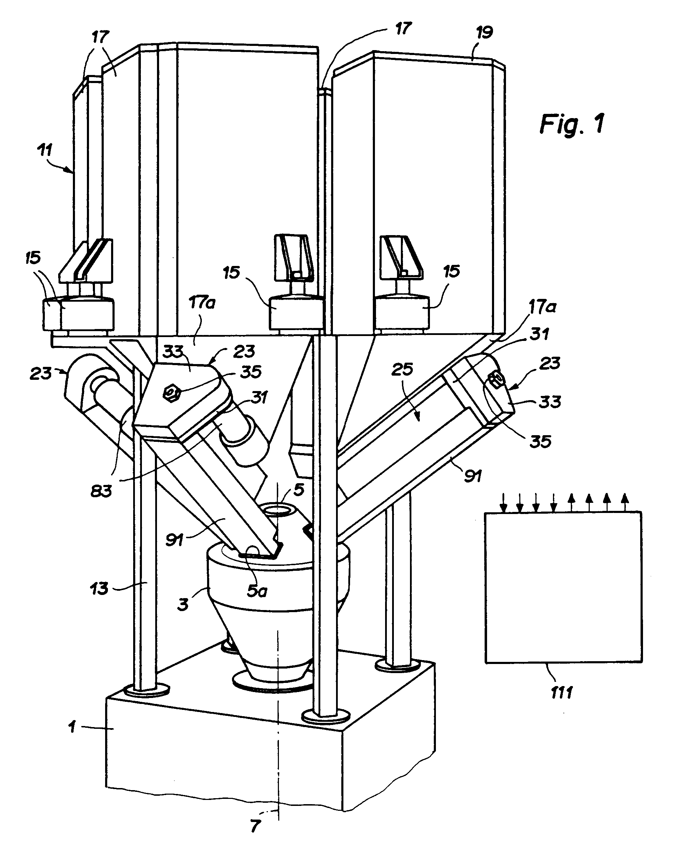

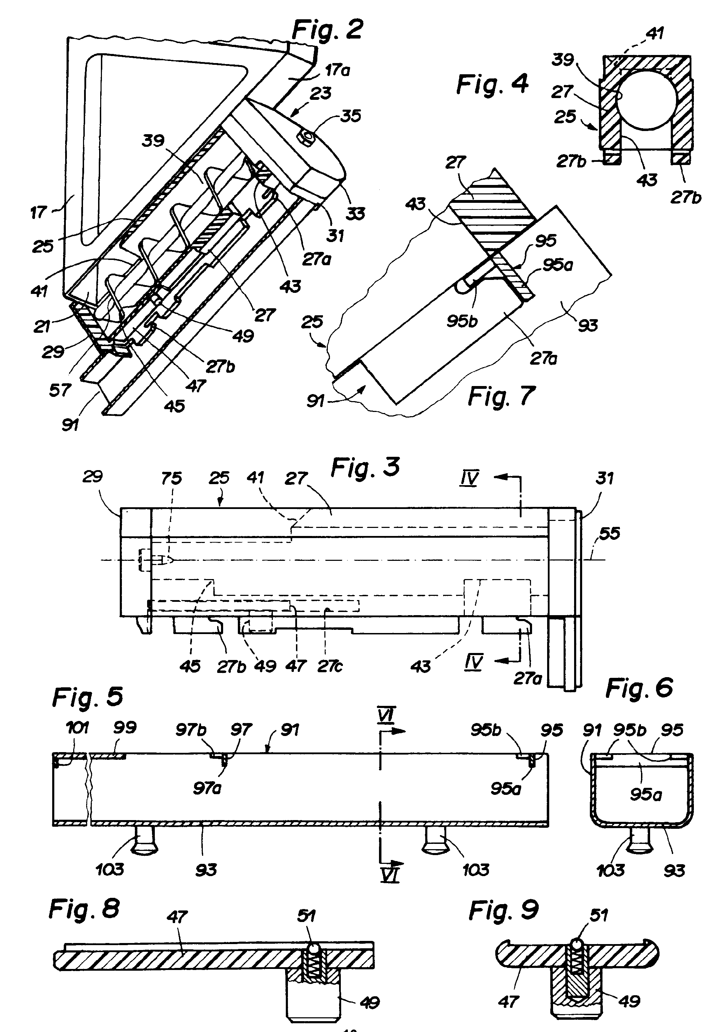

In der Figur 1 ist ein Teil einer zum Verarbeiten eines Schüttgut-Gemisches dienenden Maschine 1, nämlich eines Extruders zum kontinuerlichen Extrudieren von Kunststoff ersichtlich. Die Maschine 1 besitzt einen trichterartigen Schüttgut-Sammel-Einlauf 3, mit einem sich nach oben konisch verjüngenden Deckteil 5, der mit vier um eine vertikale Achse 7 herum verteilten Einlassöffnungen 5a versehen ist. Eine als Ganzes mit 11 bezeichnete Mehrfach-Dosiereinrichtung weist ein Gestell 13 auf, das zum Beispiel um die Achse 7 herum verteilte und starr mit dem Gestell der Maschine 1 verbundene Säulen besitzt. Die Dosiereinrichtung weist mindestens zwei und nämlich vier je über mindestens einen und nämlich über drei Last-Messwandler 15 mit dem Gestell 13 verbundene, identisch ausgebildete Gutspeicher 17 auf. Diese sind im Grundriss um einen den Schüttgut-Sammel-Einlauf 3 sowie dessen Achse 7 enthaltenden, gemeinsamen, zentralen Bereich der Mehrfach-Dosiereinrichtung 11 herum verteilt. Die vier Gutspeicher 17 befinden sich mindestens zum Teil über dem von der Maschine 1 eingenommenen Grundrissbereich und haben alle den gleichen Abstand von der Achse 7. Dieser Abstand der Gutspeicher von der Achse und den Abständen der einander paarweise benachbarten Gutspeicher sind relativ klein und beispielsweise kleiner als die maximale horizontale Ausdehnung der Gutspeicher, so dass die vier Gutspeicher im Grundriss - im Vergleich zu ihren horizontalen Querschnittsflächen - nur relativ wenig Platz beanspruchen. Jeder Gutspeicher 17 besteht aus einem formfesten Behälter und hat einen prismatischen, oben mit einem wegnehmbaren Deckel 19 verschlossenen Oberteil und einen sich nach unten verjüngenden Unterteil mit einem zur Achse 7 hin geneigten, ebenen Wandteil 17a. Dieser ist in seinem untersten Bereich mit einer in der Figur 2 ersichtlichen Öffnung versehen, die einen Auslass 21 bildet. Mindestens einer der anderen Wandteile jedes Gutspeicher-Unterteils ist mit einer lösbar befestigten, eine beispielsweise dreieckige Öffnung verschliessenden und in der Figur 2 entfernten und die besagte Öffnung freigebenden Verschalungsplatte versehen.

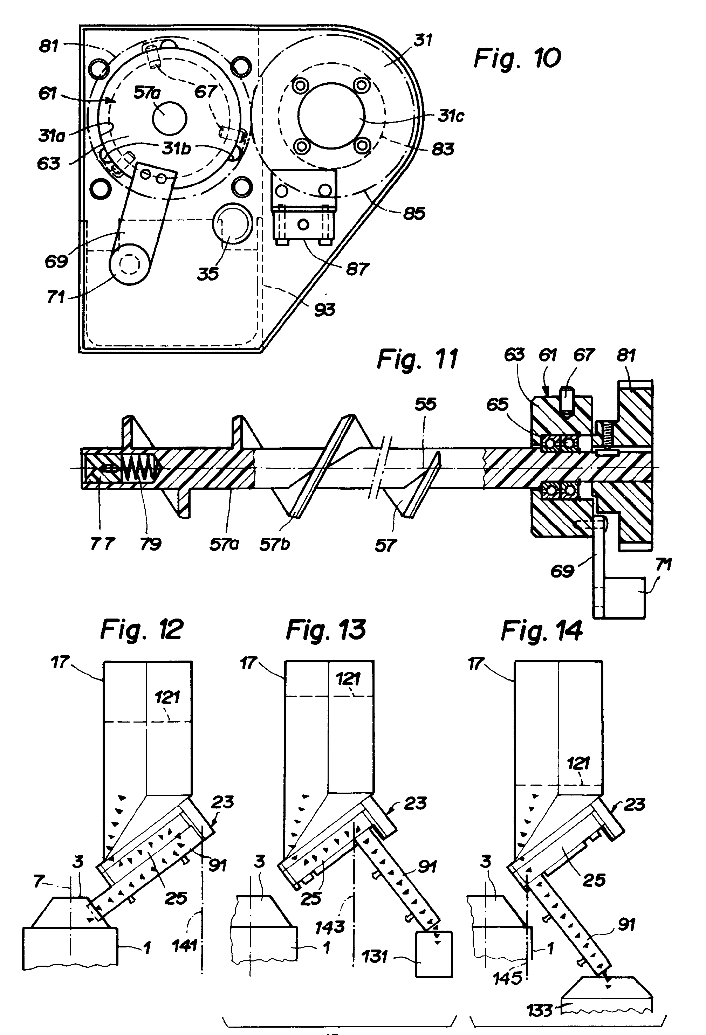

Am Wandteil 17a jedes Gutspeichers 17 ist eine als Ganzes mit 23 bezeichnete Austragvorrichtung befestigt. Diese weist einen in seiner Längs- und Förderrichtung gleich wie der Wandteil 17a geneigten, geraden, sich vollständig unter diesem befindenden Förderkanal 25 auf, wobei der Neigungswinkel gegen eine Horizontalebene etwa im Bereich von 30° bis 60° liegt und nämlich 35° bis 45° beträgt. Die vier Förderkanäle 25 verlaufen nach oben von der Achse 7 weg und divergieren also nach oben. Der separat und in horizontaler Lage in den Figuren 3 sowie 4 gezeichnete Förderkanal 25 besitzt ein aus einem einstückigen Kunststoffkörper bestehendes, längliches Gehäuse 27, an dessen unterem Ende eine Abschlussplatte 29 und an dessen oberem Ende ein ebenfalls plattenförmiger, stellen weise über das Gehäuse 27 herausragender Support 31 mit Schrauben lösbar befestigt ist. Wie es in der Figur 10 ersichtlich ist, besitzt der Support 31 ein durchgehendes, durch eine abgestufte Bohrung gebildetes Loch 31a, drei gleichmässig über dessen Umfang verteilte Verriegelungsausnehmungen 31b und noch ein anderes Loch 31c, das sich in einer zur Längsrichtung des Förderkanals parallelen Projektion neben dem Gehäuse 27 befindet. Der Support 31 trägt noch näher beschriebene Teile und ist gegen oben bzw. aussen durch eine in den Figuren 1 sowie 2 ersichtliche und in den Figuren 3 und 10 weggelassene Abdeckhaube 33 abgedeckt. Diese ist mit Befestigungsmitteln 35 lösbar befestigt, die zum Beispiel einen im Support 31 verankerten, eine Bohrung der Abdeckhaube 33 durchdringenden Gewindebolzen sowie eine Mutter aufweisen. Das Gehäuse 27 hat im Querschnitt einen im allgemeinen viereckigen Umriss und begrenzt einen Durchgang 39 für das zu fördernde Schüttgut. Der Durchgang 39 ist im mittleren Bereich des Förderkanals 25 im Querschnitt allseitig geschlossen sowie kreisförmig und hat eine gerade, geneigte Längs-Mittel-Achse 55. Die geneigte, im Querschnitt die obere Begrenzung des Gehäuses 27 bildende Deckwand ist im unteren Förderkanal-Endabschnitt mit einer sich mindestens teilweise mit dem Auslass 21 überdeckenden Öffnung oder Ausnehmung versehen, die in den Durchgang 39 mündet und den Eingang 41 des Förderkanals 25 bildet. Die im Querschnitt die untere Begrenzung des Gehäuses 27 bildende, geneigte Gehäuse-Bodenwand ist im oberen Förderkanal-Endabschnitt mit einer vom Durchgang 39 nach unten führenden, als erster, oberer Ausgang 43 des Förderkanals dienenden Öffnung versehen. Dieser erste, obere Ausgang 43 ist entlang der Achse 55 vom Eingang 41 beabstandet und befindet sich bei einer höher gelegenen Stelle der Achse 55 als der Eingang 41. Zudem befindet sich die ganze Begrenzung des Ausgangs 43 oberhalb der Begrenzung des Eingangs 41. Die Bodenwand des Gehäuses 27 ist bei ihrem unteren Ende sowie unterhalb des Eingangs 41 mit einer einen zweiten, unteren Ausgang 45 bildendenden Öffnung oder, genauer gesagt, einer vom unteren Bodenwandende her eingeschnittenen Ausnehmung versehen. Der zweite, untere Ausgang 45 erstreckt sich also bis zur tiefsten Stelle des Innenraums des Förderkanals 25. Die Bodenwand des Gehäuses 27 weist ferner bei beiden Längsrändern entlang von diesen verlaufende Rippen auf. Jede von diesen ist durch Einschnitte in mehrere Abschnitte unterteilt, von denen der oberste und der unterste im allgemeinen parallel zur Längsrichtung des Förderkanals 25 und also geneigt verlaufende, von oben her eingeschnittene Einschnitte haben und je einen hakenförmigen Aufhängeträger 27a bzw. 27b bilden.

Die Bodenwand des Gehäuses 27 ist in einem den unteren Ausgang 45 enthaltenden Bereich ferner mit einer Führung 27c versehen, in der ein separat in den Figuren 8 sowie 9 gezeichnetes Absperrorgan 47 in der Längsrichtung des Förderkanals verschiebbar geführt ist, das den unteren Ausgang 45 in einer Schliessstellung abschliesst und in einer Freigabestellung freigibt. Das Absperrorgan 47 ist auf seiner geneigten Unterseite mit einem nach unten ragenden Zapfen versehen, der als Bedienungs- und Sicherungsorgan 49 dient. Ein zu dessen Befestigung vorgesehener, teilweise hohler Gewindebolzen dient gleichzeitig zum bewegbaren Halten eines federbelasteten, aus einer Kugel bestehenden Rastelements 51, das zusammen mit zwei Rastvertiefungen des Gehäuses 27 Rastmittel bildet und in der Schliess- sowie in der Freigabestellung des Absperrorgans 47 lösbar in die Rastvertiefungen einrastet.

Zu jeder Austragvorrichtung 23 gehört ein im Förderkanal 25 um die Achse 55 von dessen Durchgang 39 drehbar gelagertes, in den Figuren 2 und 11 ersichtliches Förderorgan 57, nämlich eine Schnecke mit einem Schaft 57a sowie mindestens einer zusammen mit diesem aus einem einstückigen Kunststoff-Körper bestehenden, in der Art eines eingängigen Gewindes verlaufenden Wendel 57b. Das Förderorgan 57 ist auf der einen Seite seiner Wendel 57b in einer Lagervorrichtung 61 radial sowie axial gelagert. Die Lagervorrichtung besitzt einen kreisringförmigen, aus Kunststoff bestehenden Lagerhalter 63 und mindestens ein in diesem angeordnetes, mit Rollkörpern, etwa Kugeln, versehenes Lager 65 und nämlich zwei solche. Der Aussendurchmesser des Lagerhalters 63 ist derart bemessen, dass dieser satt, d.h. mit kleinem radialem Spiel, aber herausnehmbar in den weiteren, sich auf der Aussenseite des Supports 31 befindenden Abschnitt des abgestuften Lochs 31a hineinpasst. Der Lagerhalter 63 hat drei über seinen Umfang verteilte, radiale Sackbohrungen, in denen aus dem Lagerhalter herausragende, als Verriegelungselemente 67 dienende Zapfen fest verankert sind. Am Lagerhalter 63 ist ferner ein zum manuellen Verschwenken von diesem dienender Schwenkarm 69 mit einem Handgriff 71 befestigt. Wenn sich der Lagerhalter 63 in seiner in der Figur 10 gezeichneten Schwenkstellung befindet, greifen die Verriegelungselemente 67 derart in die Verriegelungsausnehmungen 31b ein, dass sie den Lagerhalter 63 gegen vom Gehäuse 27 weg gerichtete Verschiebungen sichern. Wenn dagegen der Lagerhalter 63 mittels des Schwenkarms 69 in der in der Figur 10 ersichtlichen Draufsicht ein wenig im Uhrzeigersinn verschwenkt wird, kann die Lagervorrichtung 61 mitsamt dem von ihr gelagerten Förderorgan 57 schräg nach oben aus dem Förderkanal herausgezogen werden. Die Verriegelungselemente 67 bilden also zusammen mit den Verriegelungsausnehmungen 31b bayonettverschlussartige Befestigungsmittel für die lösbare Befestigung der Lagervorrichtung 61 am Support 31 des Förderkanals 25. Das Förderorgan 57 wird beim Betrieb in der in der Figur 10 gezeichneten Ansicht derart, nämlich im Gegenuhrzeigersinn, gedreht, dass das Förderorgan bestrebt ist, den Lagerhalter 63 in diejenige Schwenkstellung zu drehen, in der er durch die Verriegelungselemente 67 mit dem Support 31 verriegelt ist. An der Abschlussplatte 29 ist noch ein Spitzenlager 75 befestigt, das in eine konische Vertiefung eines Lagerkörpers 77 eingreift, der auf der der Lagervorrichtung 61 abgewandten Seite der Wendel 57b in einem Sackloch des Schafts 57a axial verschiebbar gehalten und durch eine Feder 79 gegen das Spitzenlager 75 gedrückt wird. Auf dem aus dem Support 31 sowie der Lagervorrichtung 61 herausragenden Ende des Förderorgan-Schafts 57a sitzt ein in der Figur 10 nur strichpunktiert angedeutetes sowie in der Figur 11 im Schnitt gezeichnetes Zahnrad 81. Am Support 31 ist neben dem Gehäuse 27 eine Antriebsvorrichtung 83 mit einem elektrischen Motor - nämlich einem Gleichstrommotor mit elektrisch veränderbarer Drehzahl - und einem Untersetzungsgetriebe befestigt. Das letztere hat eine das Loch 31c des Supports 31 durchdringende Welle, auf der ein in der Figur 10 strichpunktiert angedeutetes, mit dem Zahnrad 81 kämmendes Zahnrad 85 sitzt, das übrigens derart bemessen ist, dass es das Herausnehmen und Einsetzen der Lagervorrichtung 61 sowie das Förderorgan 57 aus dem Förderkanal bzw. in diesen nicht behindert. Am Support 31 ist ferner noch ein Endschalter 87 befestigt. Die Abdeckhaube 33 deckt den Schwenkarm 69, die Zahnräder 81 sowie 85 und den Endschalter 87 gegen die Umgebung ab und kann zudem den Schwenkarm 69 gegen eine Entriegelung der Lagervorrichtung 61 sichern. Der Endschalter 87 ist derart angeordnet, dass er bei demontierter Abdeckhaube 33 die Stromzufuhr zum Motor der Antriebsvorrichtung 83 unterbricht.

Jede der einem der vier Gutspeicher 17 zugeordneten Austragvorrichtungen 23 weist ferner einen über seine ganze Länge geraden sowie formfesten Rutschkanal 91 auf. In der Figur 1 wurde der sich - von rechts her gezählt - beim zweiten Gutspeicher befindende Rutschkanal weggelassen. Einer der Rutschkanäle 91 ist in separatem, demontiertem Zustand in den Figuren 5 sowie 6 ersichtlich und weist als Hauptbestandteil eine im Querschnitt U-förmige Rinne 93 auf. Diese ist an beiden Enden offen und durch Ränder, oder genauer gesagt, schmale Randflächen begrenzt, die bei jedem der beiden Rinnenenden eine Ebene aufspannen, welche mit der Längsrichtung der Rinne einen Winkel, und zwar einen rechten Winkel bildet. Zwischen den beiden Längsrändern der Rinne 93 ist beim sich auf der rechten Seite der Figur 5 befindenden Ende und im mittleren Bereich der Rinne je ein Steg befestigt, der als Einhängeelement 95 bzw. 97 dient. Jedes Einhängeelement 95, 97 besteht aus einem Stück eines Winkelprofilstabs mit einem rechtwinklig von den Längsrändern der Rinne 93 zu deren Grund hin ragenden Schenkel 95a bzw. 97a. Vom anderen Schenkel der Einhängeelemente 95, 97, der vom Schenkel 95a bzw. 97a parallel zur Längsrichtung der Rinne 93 nach links wegragt, ist der mittlere Bereich herausgeschnitten, so dass vom besagten anderen Schenkel lediglich bei seinen Enden je zwei laschenförmige, in einer zur Längsrichtung des Rutschkanals parallelen Ebene liegende Abschnitte 95b bzw. 97b übrig bleiben. Diese bilden zusammen mit den sich in ihrem Bereich befindenden Abschnitten des Schenkels 95a bzw. 97a eine Art Haken. Der sich in der Figur 5 links befindende Endabschnitt der Rinne 93 ist durch eine Deckplatte 99 abgedeckt. Ferner ist am sich in der Figur 5 links befindenden Rinnenende ein Einhängeelement 101 vorhanden, das durch einen die beiden Rinnen-Seitenwände verbindenden Steg gebildet ist und aus einem rechtwinklig zur Längsrichtung des Rutschkanals von der Deckplatte 99 weg zum Grund der Rinne 93 hin ragenden Stück eines Flach- oder Rechteck-Profilstabes besteht. Die Deckplatte 99 bildet zusammen mit dem ihre untere Seite zumindest annähernd berührenden Einhängeelement 101 gewissermassen einen winkelförmigen Haken. Es sei noch darauf hingewiesen, dass die Einhängeelemente 95, 97, 101 in der Figur 2 aus Gründen der Übersichtlichkeit weggelassen wurden. An der den Grund der Rinne 93 bildenden Wand sind zwei zapfenförmige Handgriffe 103 befestigt.

Die Aufhängeträger 27a, 27b des Förderkanals 25 dienen als Elemente zum Tragen des Rutschkanals 91 und bilden zusammen mit den Einhängeelementen 95, 97, 101 Aufhängemittel, die ermöglichen, jeden Rutschkanal 91 wahlweise in verschiedenen Stellungen durch Aufhängen lösbar mit dem zugeordneten Förderkanal 25 zu verbinden. In der Figur 1 befindet sich der Rutschkanal 91 in einer ersten Stellung, nämlich in der Arbeitsstellung, in der er parallel zum zugeordneten Förderkanal 25 entlang von diesem verläuft. Der ganz oder teilweise in den Figuren 2, 7 sowie 12 ersichtliche Rutschkanal befindet sich ebenfalls in der Arbeitsstellung. In der Arbeitsstellung des Rutschkanals 91 liegt dessen Rinne 93 mit ihren sich im Querschnitt oben befindenden Längsrändern an der im Querschnitt die untere Begrenzung des Förderkanals 25 bildenden Bodenwand des Gehäuses 27 an. Für die Montage des Rutschkanals in der Arbeitsstellung werden dessen Einhängeelemente 95 sowie 97 in die Aufhängeträger 27a bzw. 27b des Förderkanals eingehängt. Jeder der beiden Abschnitte 95b des Einhängeelements 95 greift dann - wie es für einen von ihnen in der Figur 7 ersichtlich ist - schräg von oben her in den Einschnitt von einem der hakenartigen Aufhängeträger 27a ein und liegt auf der unteren der beiden zur Kanallängsrichtung parallelen Begrenzungsfläche des Einschnitts auf. Ferner liegt der Schenkel 95a an einer zur Kanallängsrichtung rechtwinkligen Fläche der beiden Aufhängeträger 27a an. Das Einhängeelement 97 ist in analoger Weise in die beiden Aufhängeträger 27b eingehängt. Wenn der Rutschkanal 91 in der Arbeitsstellung am Förderkanal befestigt werden soll, braucht man ihn lediglich derart zum Förderkanal 25 anzuheben und dann schräg nach unten zu verschieben, dass seine Einhängeelemente 95, 97 in die beschriebene Lage gelangen. Der Rutschkanal wird dann durch die auf ihn einwirkende Schwerkraft in der Arbeitsstellung festgehalten, ohne dass hiezu irgendwelche andere Befestigungsmittel vorgesehen werden müssen. Um den in der Arbeitsstellung montierten Rutschkanal vom Förderkanal abzuhängen, braucht man selbstverständlich nur seine Einhängeelemente 95, 97 wieder aus den Aufhängeträgern 27a bzw. 27b auszuhängen, indem man den Rutschkanal entlang dem Förderkanal schräg nach oben schiebt. Der Support 31 ist derart ausgebildet, dass das sich in der Arbeitsstellung oben befindende Ende der Rinne 93 einen diese abschliessenden Absatz des Supports 31 derart umgreifen kann, dass der betreffende Rutschkanal 91 mit den besagten Absatz umgreifender Rinne 93 um die zum Ein- und Aushängen erforderliche Wegstrecke verschiebbar ist. Derjenige Teil jedes Rutsch kanals 91, der in der Arbeitsstellung am zugeordneten Förderkanal 25 anliegt, ist auf seiner diesem zugewandten Seite im wesentlichen, nämlich abgesehen von den Einhängeelementen 95, 97, offen. Der sich in der Arbeitsstellung jedes Rutschkanals unten befindende, schräg nach unten über den Förderkanal 25 hinaus ragende Endabschnitt der Rinne 93 ist auf seiner oberen Seite durch die Deckplatte 99 abgedeckt. Das untere Ende jedes sich in Arbeitsstellung befindenden Rutschkanals 91 mündet durch die im Deckteil 5 des Schüttgut-Sammel-Einlaufs 3 vorhandene Einlassöffnung 5a hindurch in das Innere des Einlaufs 3.

Jeder der vier Rutschkanäle 91 kann statt in der Arbeitsstellung in der in der Figur 13 dargestellten Probeentnahmestellung am Förderkanal 25 befestigt werden. Dazu wird er mit seinem Einhängeelement 101 beim oberen Ende des Förderkanals 25 in die Aufhängeträger 27a eingehängt, wobei dann die Deckplatte 99 in analoger Weise an den Aufhängeträgern 27a anliegt wie in der Figur 7 der Schenkel 95a. Das sich in der Arbeitsstellung unten befindende Ende des Rutschkanals 91 befindet sich in der Probeentnahmestellung beim oberen Ende des Förderkanals 25. Der Rutschkanal liegt in der Probeentnahmestellung mit den bei seinem betreffenden Ende vorhandenen Rändern der Rinne 93 sowie der Deckplatte 99 an der Bodenwand des Gehäuses 27 des Förderkanals 25 an, wobei er den ersten, oberen Förderkanal-Ausgang 43 mindestens bei dessen unterer Begrenzung sowie bei dessen beiden seitlichen Begrenzungen umschliesst. Der Rutschkanal ragt in der Probeentnahmestellung vom Förderkanal weg geneigt nach unten und bildet mit dessen Längsrichtung einen Winkel, und zwar entsprechend dem Winkel zwischen der Längsrichtung der Rinne 93 und der Ebene, die von den beim betreffenden Rinnenende vorhandenen Rändern der Rinne aufgespannt wird, einen rechten Winkel. Die Grundwand der Rinne 93 befindet sich im Querschnitt dann auf deren am tiefsten gelegenen Längsseite. Das Eigengewicht des Rutschkanals und das Gewicht des bei der Probeentnahme durch diesen hindurch rutschenden Schüttguts erzeugen in bezug auf das durch die Aufhängeträger 27a in Zusammenwirkung mit dem Einhängeelement 101 definierte Auflager ein Drehmoment, das bestrebt ist, den Rutschkanal in der in der Figur 13 gezeichneten Darstellung im Uhrzeigersinn zu drehen. Dieses Drehmoment drückt also den sich unterhalb des Einhängeelements 101 befindenden Bereich des beim betreffenden Ende der Rinne 93 vorhandenen Rinnenrandes an den Förderkanal an und hält den Rutschkanal dadurch in der beschriebenen Lage.

Jeder Rutschkanal 91 kann ferner in der in der Figur 14 gezeichneten Entleerungsstellung lösbar am Förderkanal 25 befestigt werden. In diesem Fall ist das Einhängeelement 101 in den beiden unteren Aufhängeträgern 27b eingehängt. Das sich in der Figur 13 beim oberen Ende des Förderkanals befindende Rutschkanalende befindet sich nun beim unteren Ende des Förderkanals. Abgesehen von diesen Unterschieden wird der Rutschkanal 91 in der Entleerungsstellung in ähnlicher Weise am Förderkanal 25 gehalten wie in der Probeentnahmestellung.

Jeder Last-Messwandler 15 weist Mittel, nämlich beim Betrieb schwingende Saiten und elektronische Bauteile auf, um ein elektrisches Signal zu erzeugen, das ein Mass für die vom betreffenden Gutspeicher 17 auf ihn ausgeübte Last oder Kraft gibt. Die Dosiereinrichtung 11 besitzt ferner eine in der Figur 1 schematisch als Block gezeichnete, elektronische Steuer- und/oder Regelvorrichtung 111, die über durch Pfeile angedeutete elektrische Leitungen mit den Last-Messwandlern 15 und den Motoren der Antriebsvorrichtungen 83 verbunden ist. Die Steuer- und/oder Regelvorrichtung 111 weist elektronische Schaltungsmittel auf, um aus den von den Last-Messwandlern gelieferten, elektrischen Signalen die Gewichte der Gutspeicher 17 mitsamt der zugeordneten Austragvorrichtungen 23 sowie der in den Gutspeichern und Austragvorrichtungen vorhandenen Schüttgütern zu ermitteln und aufgrund der beim Betrieb stattfindenden Abnahmen dieser Gewichte durch Steuern der Drehzahlen der Förderorgane 57 die pro Zeiteinheit von diesen geförderten Schüttgutmengen zu regeln, so dass die letzteren innerhalb vorgegebener Sollwertbereiche liegen und möglichst genau vorgegebene Sollwerte haben. Die Vorrichtung 111 ist ferner mit Eingabe- und/oder Einstellorganen versehen, um die Sollwerte sowie Sollwertbereiche in digitaler oder analoger Form einzugeben bzw. einzustellen und nötigenfalls gemäss einem Programm zeitlich zu ändern.

Beim normalen Betrieb der Dosiereinrichtung 11 sind die den benötigten Gutspeichern 17 zugeordneten Rutschkanäle 91 alle in der Arbeitsstellung befestigt. Das im Innenraum jedes Gutspeichers 17 vorhandene, in der Figur 12 mit 121 bezeichnete Schüttgut rutscht oder fällt zuerst durch den Auslass 21 des Gutspeichers und den Eingang 41 des Förderkanals 25 in dessen Durchgang 39, wird durch das im letzteren vorhandene Förderorgan 57 nach oben zum oberen Ausgang 43 gefördert, gelangt durch diesen hindurch in den Rutschkanal 91 und rutscht schliesslich entlang von diesem zum Schüttgut-Sammel-Einlauf 3. Die Bewegung des Schüttgutes ist in der Figur 12 - wie auch in den Figuren 13 sowie 14 - durch Pfeile veranschaulicht. Die Rutschrichtung des Schüttgutes im Rutschkanal 91 ist dabei antiparallel - d.h. parallel aber entgegengesetzt - zur Schüttgut-Förderrichtung im Förderkanal 25. Im Einlauf 3 gelangen die von den verschiedenen Gutspeichern zugeführten und mittels der Förderorgane dosierten Schüttgüter zusammen und werden mit einander vermischt.

Wenn aus einem Gutspeicher 17 eine Schüttgut-Probe entnommen werden soll, wird der dem betreffenden Gutspeicher zugeordnete Rutschkanal 91 abgehängt und in der Probeentnahmestellung gemäss der Figur 13 wieder aufgehängt, wobei die Antriebsvorrichtung 83 während des Umhängevorgangs ausgeschaltet wird. Bei der Probeentnahme wird das Schüttgut 121 wiederum durch das Förderorgan zum oberen Förderkanal-Ausgang 43 gefördert und kann dann durch den Rutschkanal in einen für die Probeentnahme vorgesehenen Behälter 131 rutschen, der in einem von der Maschine 1 und insbesondere auch im Grundriss mindestens von deren Einlauf 3 entfernten Raumbereich angeordnet ist.

Falls ein Gutspeicher 17 entleert werden soll, wird der zugeordnete Rutschkanal 91 gemäss der Figur 14 in der Entleerungsstellung am unteren Ende des Förderkanals aufgehängt. Danach wird das Absperrorgan 47 manuell in die Freigabestellung verschoben, in welcher es den unteren Ausgang 45 des Förderkanals 25 freigibt. Das Schüttgut gelangt dann wiederum vom Innenraum des Gutspeichers 17 durch dessen Auslass 21 sowie den Eingang 41 des Förderkanals 25 in den Anfangsabschnitt, d.h. den untersten Abschnitt des Durchgangs 39. Dort rutscht und/oder fällt es unter der Einwirkung der Schwerkraft durch die vom Förderorgan freigelassenen Bereiche des untersten Durchgangsabschnitts zum Ausgang 45. Die Abmessungen sowie Anordnungen des Eingangs 41, des unteren Ausgangs 45 und des Förderorgans 57 sind derart auf einander abgestimmt, dass bei jeder möglichen Drehstellung des Förderorgans auf beiden Längsseiten von dessen Schaft 57a Schüttgut vom Eingang 41 zum Ausgang 45 gelangen kann. Vom Ausgang 45 gelangt das Schüttgut in den Rutschkanal 91 und rutscht schliesslich durch diesen in einen zur Aufnahme des Gutes vorgesehenen Behälter 133, der sich in einem von der Maschine 1 und insbesondere auch im Grundriss mindestens von deren Einlauf 3 entfernten Raumbereich befindet. Wenn die Entleerung beendet ist, kann der untere Förderkanal-Ausgang 45 durch Verschieben des Absperrorgans 47 weider geschlossen werden. Das beim Verschieben als Handgriff dienende Bedienungs- und Sicherungsorgan 49 ist derart angeordnet, dass es in der Freigabestellung des Absperrorgans zum Raumbereich ragt, in dem sich in der Arbeitsstellung das Einhängeelement 97 befindet. Das Bedienungs- und Sicherungsorgan 49 sichert daher die Dosiereinrichtung bei offenem, unterem Ausgang 45 gegen ein Einhängen des Rutschkanals in der Arbeitsstellung. Zudem kann das Absperrorgan 47 noch mit Mitteln versehen und/oder verbunden werden, um in seiner Freigabestellung in Zusammenwirkung mit dem Endschalter 87 oder einem zusätzlichen Endschalter einen Betrieb des Motors der Antriebsvorrichtung 83 zur Vermeidung von Unfällen zu verhindern.

Wie aus der vorgängigen Beschreibung hervorgeht, wird das beim normalen Betrieb und der Probeentnahme von den vier Gutspeichern 17 in den jeweils zugeordneten Förderkanal 25 gelangende Gut entlang von diesem von der sich im Grundriss im zentralen Bereich zwischen den vier Gutspeichern befindenden Achse 7 weg geneigt nach oben zum ersten, oberen Ausgang 43 gefördert. Die Rutschkanäle sind in der Arbeitsstellung nach unten zur Achse 7 sowie zum besagten, zentralen Bereich, in der Probeentnahme- sowie Entleerungsstellung dagegen rechtwinklig zum betreffenden Förderkanal nach unten von der Achse 7 sowie dem genannten zentralen Bereich weg zu einem Raumbereich geneigt, in dem Platz für die Behälter 131 bzw. 133 zum Aufnehmen des bei der Probeentnahme bzw. Entleerung der Gutspeicher anfallenden Schüttgutes vorhanden ist. Die Rutschkanäle konvergieren also in der ersten Stellung oder Arbeitsstellung nach unten, während sie in den beiden andern Stellungen, d.h. in der Probeentnahme- sowie Entleerungsstellung, nach unten divergieren. In den Figuren 12 bis 14 ist noch je eine durch das jeweils obere Ende der Rinnen-Grundwand des Rutschkanals 91 verlaufende Referenz-Vertikalebene 141 bzw. 143 bzw. 145 angedeutet. Die drei Referenz-Vertikalebenen 141, 143, 145 sind zu einander parallel sowie rechtwinklig zu den Zeichenebenen der Figuren 12 bis 14 und also auch rechtwinklig zu vertikalen Ebenen, die parallel zu den Längsrichtungen des in diesen Figuren gezeichneten Förderkanals 25 sowie Rutschkanals 91 sind. Dieser Rutschkanal ist - von oben nach unten - in der Arbeitsstellung auf die linke Seite der Referenz-Vertikalebene 141 und in der Probeentnahmestellung sowie in der Entleerungsstellung auf die rechte Seite der Referenz-Vertikalebene 143 bzw. 145 geneigt. Jeder der anderen Rutschkanäle der Dosiereinrichtung ist in analoger Weise in der der Arbeitsstellung auf die eine und in der Probeentnahme- sowie in der Entleerungsstellung auf die andere Seite von zu einander parallelen Referenz-Vertikalebenen geneigt. Wie sich zudem aus der vorgängigen Beschreibung ergibt, kann ein- und derselbe Rutschkanal 91 wahlweise in einer von drei Stellungen lösbar am Förderkanal 25 der betreffenden Austragvorrichtung 23 befestigt werden, wobei die Rutschkanäle zum Wechseln ihrer Stellungen lediglich ab- und wieder aufgehängt werden müssen, was sehr schnell und einfach getan werden kann.

Falls ein Förderkanal sowie das zugeordnete Förderorgan gereinigt und/oder ein Förderorgan - beispielsweise zum Fördern eines andersartigen Schüttgutes - ausgewechselt werden soll, braucht man zum Ausbauen eines Förderorgans lediglich die betreffende Abdeckhaube 33 zu entfernen sowie den Schwenkarm 69 zu verschwenken und kann danach das Förderorgan schräg nach oben sowie von der Achse 7 weg aus dem Förderkanal herausziehen, wobei auch die Lagervorrichtung 61 vom Support 31 getrennt wird und die Zahnräder 81, 85 ausser Eingriff gelangen. Danach kann das oder ein anderes Förderorgan wieder in den Förderkanal hinein geschoben werden, wobei die Lagervorrichtung 61 wieder in das abgestufte Loch 31a des Supports gelangt und das Förderorgan mittels der besagten Zahnräder 81, 85 wieder in Drehwirkverbindung mit der Antriebsvorrichtung 83 gebracht wird. Die beiden Zahnräder 81, 85 dienen also bei der Demontage und Montage eines Förderorgans gewissermassen als Kupplungsmittel zwischen dem Förderorgan und dem Motor. Wenn die Lagervorrichtung 61 wieder im Loch 31a des Supports 31 sitzt, wird sie durch Verschwenken des Schwenkarms 69 sowie Lagerhalter 63 mit dem Support 31 verriegelt. Danach ist selbstverständlich wieder die Abdeckhaube zu montieren. Das Aus- sowie Einbauen eines Förderorgans ist also ebenfalls schnell und einfach durchführbar. Der Schwenkarm 69 ist beispielsweise derart angeordnet, dass er in der Freigabestellung, in der die Verriegelungselemente 67 aus den Verriegelungsausnehmungen 31b herausnehmbar sind, eine Montage der Abdeckhaube 33 verhindert. Wie bereits erwähnt, unterbricht der Endschalter 87 bei entfernter Abdeckhaube 33 die Stromzufuhr zum Motor der Antriebsvorrichtung 83 und verhindert daher einen Betrieb des Motors bei entfernter Abdeckhaube.

Die Dosiereinrichtung und deren Betrieb können in manigfaltiger Weise variiert werden. Die Dosiereinrichtung kann zum Beispiel statt eines mit dem Gestell der aus einem Extruder bestehenden Maschine 1 verbundenen Gestells ein von der Maschine unabhängiges, d.h. separat auf einem Boden stehendes Gestell haben. Des weiteren können die Rutschkanäle statt in den Einlauf einer zum Verarbeiten des Schüttgut-Gemisches dienenden Maschine in den Einlauf eines Misch- und Sammelbehälters münden. Selbstverständlich kann man mit einer vier Gutspeicher und je eine zugeordnete Austragvorrichtung aufweisenden Dosiereinrichtung zeitweise auch nur zwei oder drei Güter dosieren. Des weiteren kann die Anzahl vorhandener Gutspeicher sowie Austragvorrichtungen auch nur zwei oder drei oder mehr als vier betragen. Zudem kann sogar eine nur einen einzigen Gutspeicher aufweisende Dosiereinrichtung mit einer Austragvorrichtung der beschriebenen Art ausgerüstet werden.

Die zum lösbaren Befestigen eines Rutschkanals in verschiedenen Stellungen dienenden Aufhängemittel können ebenfalls auf verschiedene Arten geändert werden. Beispielsweise könnte man bei den sich über die ganze Breite des Rutschkanals erstreckenden Einhängeelementen 95, 97, 101 die mittleren, sich im montierten Zustand zwischen den Aufhängeträgern befindenden Abschnitte weglassen, so dass dann auf jeder Längsseite des Rutschkanals drei separate Einhängeelemente vorhanden wären. Des weitern könnten eventuell zusätzlich zu den Einhängemitteln noch lösbare, etwa in der Art von Schnellverschlüssen ausgebildete Sicherungs- und/oder Befestigungsmittel zum Sichern und Befestigen der Rutschkanäle vorgesehen werden.

Die Rinne 93 des Rutschkanals 91 könnte mindestens an demjenigen Ende, das sich in der Arbeitstellung unten und in der Probeentnahmestellung sowie Entleerungsstellung oben befindet, durch Ränder begrenzt sein, die eine Ebene aufspannen, welche nicht genau, sondern nur ungefähr rechtwinklig zur Rinnen-Längsrichtung ist und mit dieser beispielsweise einen etwa 70° bis 110° betragenden Winkel bildet. Der Rutschkanal könnte dann in der Arbeitsstellung wie beim in den Figuren 1 bis 14 gezeichneten Ausführungsbeispiel parallel zum Förderkanal sein, jedoch mit diesem in der Probeentnahmestellung und Entleerungsstellung einen 70° bis 110° betragenden Winkel bilden.

Jedes Förderorgan könnte statt einer Schnecke eine in axialer Richtung federnde, hohle Wendel aufweisen, die einen freien Hohlraum oder mit kleinem Spiel einen feststehenden oder beim Betrieb zusammen mit ihr rotierenden Dorn umschliesst. Ferner könnte man für jeden Förderkanal zwei um parallel neben einander verlaufende Achsen drehbare, in einander eingreifende Schnecken und/oder Wendeln aufweisende Förderorgane vorsehen.

## Patentansprüche

1. Dosiereinrichtung zum Dosieren mindestens eines Schüttgutes (121), mit mindestens einem Gutspeicher (17), einem diesem zugeordneten, sich unter diesem befindenden Förderkanal (25), der einen mit dem Innenraum des ihm zugeordneten Gutspeichers (17) verbundenen Eingang (41) sowie einen Ausgang für das Schüttgut (121) hat, ein Förderorgan (57) enthält und mit einem Rutschkanal (91) zum Ableiten des Schüttgutes verbunden ist, dadurch gekennzeichnet, dass der bzw. jeder Förderkanal (25) von seinem Eingang (41) zu einem oberen Ausgang (43) hin nach oben geneigt ist und noch einen sich bei seinem unteren Endabschnitt sowie unterhalb des Eingangs (41) befindenden, unteren, mit einem verstellbaren Absperrorgan (47) verschliessbaren Ausgang (45) aufweist, dass der bzw. jeder Rutschkanal (91) wahlweise in einer Arbeitsstellung und einer Entleerungsstellung lösbar mit dem zugeordneten Förderkanal (25) verbindbar ist und in der Arbeitsstellung entlang der sich im Querschnitt unten befindenden Begrenzung des Förderkanals (25) verläuft, dass in der Arbeitsstellung der obere Ausgang (43) des Förderkanals (25) in den Rutschkanal (91) mündet und dass dieser in der Entleerungsstellung einen Winkel mit dem Förderkanal (25) bildet und derart mit seinem einen, offenen Ende an diesem anliegt, dass der untere Ausgang (45) des Förderkanals (25) in den Rutschkanal (91) mündet.

2. Dosiereinrichtung nach Anspruch 1, dadurch gekennzeichnet, dass der bzw. jeder Rutschkanal (91) noch in einer Probeentnahmestellung lösbar mit dem zugeordneten Förderkanal (25) verbindbar ist und in der Probeentnahmestellung einen Winkel mit dem Förderkanal (25) bildet sowie mit seinem einen, offenen Ende derart an diesem anliegt, dass der obere Ausgang (43) des Förderkanals (25) in den Rutschkanal (91) mündet.

3. Dosiereinrichtung nach Anspruch 1 oder 2, dadurch gekennzeichnet, dass die Längsrichtung des bzw. jedes Rutschkanals (91) in jeder seiner genannten, wählbaren Stellungen parallel zu einer in der Längsrichtung des zugeordneten Förderkanals (25) verlaufenden Vertikalebene ist, dass es zu dieser rechtwinklige und zueinander parallele, durch das sich in den verschiedenen Stellungen des Rutschkanals (91) jeweils oben befindende Ende von diesem verlaufende Referenz-Vertikalebenen (141, 143, 145) gibt, dass der bzw. jeder Rutschkanal (91) in der Arbeitsstellung von oben nach unten auf die eine Seite der betreffenden Referenz-Vertikalebene (141) verläuft und dass der Rutschkanal (91) in der bzw. jeder anderen seiner genannten, wählbaren Stellungen von oben nach unten auf die der genannten Seite der Referenz-Vertikalebene (141) abgewandten Seite der jeweiligen Referenz-Vertikalebene (143, 145) verläuft.

4. Dosiereinrichtung nach einem der Ansprüche 1 bis 3, dadurch gekennzeichnet, dass der bzw. jeder Rutschkanal (91) in der bzw. jeder von der Arbeitsstellung verschiedenen, genannten, wählbaren Stellung annähernd rechtwinklig zur Längsrichtung des Förderkanals (25) ist, mit dem der Rutschkanal (91) verbunden ist.

5. Dosiereinrichtung nach einem der Ansprüche 1 bis 4, wobei sich der bzw. jeder Gutspeicher (17) mindestens in seinem unteren Bereich nach unten verjüngt und dort einen geneigten Wandteil (17a) hat, dadurch gekennzeichnet, dass der bzw. jeder Förderkanal (25) an der Unterseite des geneigten Wandteils (17a) des zugeordneten Gutspeichers (17) befestigt und parallel zu diesem geneigt ist.

6. Dosiereinrichtung nach einem der Ansprüche 1 bis 5, dadurch gekennzeichnet, dass der bzw. jeder Rutschkanal (91) über seine ganze Länge gerade sowie formfest und auf seiner sich in der Arbeitsstellung im Querschnitt oben befindenden und dem zugeordneten Förderkanal (25) zugewandten Seite mindestens im Bereich des oberen Ausgangs (43) offen ist.

7. Dosiereinrichtung nach einem der Ansprüche 1 bis 6, dadurch gekennzeichnet, dass der bzw. jeder Förderkanal (25) und Rutschkanal (91) mit Aufhängerträgern (27a, 27b) bzw. Einhängeelementen (95, 97, 101) versehen ist, die das lösbare Aufhängen des bzw. jedes Rutschkanals (91) in den besagten Stellungen ermöglichen und dass die Aufhängeträger (27a, 27b) und Einhängeelemente (95, 97,101) derart ausgebildet sind, dass der bzw. jeder am zugeordneten Förderkanal (25) aufgehängte Rutschkanal (91) durch entlang dem zugeordneten Förderkanal (25) nach oben gerichtetes Verschieben von diesem abhängbar ist.

8. Dosiereinrichtung nach einem der Ansprüche 1 bis 7, wobei mindestens zwei Gutspeicher (17) und je ein diesen zugeordneter Förderkanal (25) sowie Rutschkanal (91) vorhanden sind, dadurch gekennzeichnet, dass die Förderkanäle (25) nach oben divergieren und dass die Rutschkanäle (91) in ihrer Arbeitsstellung nach unten konvergieren und in der bzw. jeder anderen genannten, wählbaren Stellung nach unten divergieren.

9. Dosiereinrichtung nach einem der Ansprüche 1 bis 8, dadurch gekennzeichnet, dass das Förderorgan (57) derart ausgebildet ist, dass bei jeder seiner möglichen Stellungen und bei offenem, unterem Ausgang (45) Schüttgut (121) unter der Einwirkung der Schwerkraft vom Eingang (41) zum unteren Ausgang (45) sowie durch diesen hindurch gelangen kann.

10. Dosiereinrichtung nach einem der Ansprüche 1 bis 9, dadurch gekennzeichnet, dass das Absperrorgan (47) entlang dem Förderkanal (25) verschiebbar ist und dass Rastmittel (51) vorhanden sind, um das Absperrorgan (47) in zwei Stellungen, in denen es den zweiten Ausgang (45) absperrt bzw. freigibt, lösbar zu verrasten.

11. Dosiereinrichtung nach einem der Ansprüche 1 bis 10, wobei das bzw. jedes Förderorgan (57) eine Wendel (57b) besitzt, die eine in der Längsrichtung des zugeordneten Förderkanals (25) verlaufende Achse (55) umschliesst sowie durch eine einen Motor aufweisende Antriebsvorrichtung (83) um die Achse (55) drehbar ist, dadurch gekennzeichnet, dass das bzw. jedes Förderorgan (57) oberhalb des oberen Endes der Wendel (57b) in einer Lagervorrichtung (61) gelagert ist, die derart lösbar an einem am oberen Ende des Förderkanals (25) angeordneten Support (31) befestigt ist, dass sie mitsamt dem von ihr gelagerten Förderorgan (57) durch schräg nach oben gerichtetes Herausziehen des letzteren aus dem Förderkanal (25) von diesem und dem Support (31) wegnehmbar ist, wobei die Lagervorrichtung (61) mindestens ein um die Achse (55) verschwenkbares Verriegelungselement (67) aufweist, das die Lagervorrichtung (61) in einer Schwenkstellung mit dem Support (31) verriegelt sowie gegen axiale Verschiebungen sichert und in einer anderen Schwenkstellung das Wegnehmen dieser Lagervorrichtung (61) vom Support (31) ermöglicht.

12. Dosiereinrichtung nach einem der Ansprüche 1 bis 11, wobei das bzw. jedes Förderorgan (57) eine Wendel (57b) besitzt, die eine in der Längsrichtung des zugeordneten Förderkanals (25) verlaufende Achse (55) umschliesst, dadurch gekennzeichnet, dass für den bzw. jeden Gutspeicher (17) mindestens ein Lastmess-Wandler (15) und eine einen elektrischen Motor aufweisende Antriebsvorrichtung (83) zum Antreiben des Förderorgans (57) vorhanden ist und dass der bzw. jeder Lastmess-Wandler (15) und Motor elektrisch mit einer Regelvorrichtung (111) verbunden sind, die ausgebildet ist, um die von dem bzw. jedem Förderorgan (57) pro Zeiteinheit geförderte Schüttgutmenge zu regeln.

## Claims

1. Feeding equipment for feeding at least one bulk material (121), comprising at least one material storage device (17), a conveyor channel (25), which is associated with and disposed below the storage device (17), includes an entrance (41), which is connected with the interior space of the storage device (17) associated with the conveyor channel, as well as an exit for the bulk material (121), contains a conveyor element (57) and is connected with a chute (91) for the discharge of the bulk material, characterised thereby that the or each conveyor channel (25) is inclined upwardly from its entrance (41) to an upper exit (43) and further has a lower exit (45) which is disposed at the lower end portion of the or each channel as well as below the entrance (41) and which is closable by a displaceable locking member (47), that the or each chute (91) is detachably connectible with the associated conveyor channel (25) selectably in a working position and an emptying position and in the working position extends along that boundary of the conveyor channel (25) which is disposed at the bottom in the cross-section, that in the working setting the upper exit (43) of the conveyor channel (25) opens into the chute (91) and that in the emptying position this forms an angle with the conveyor channel (25) and contacts this by its one, open end in such a manner that the lower exit (45) of the conveyor channel (25) opens into the chute (91).

2. Feeding equipment according to claim 1, characterised thereby that the or each chute (91) is detachably connectible with the associated conveyor channel (25) also in a sampling position, and in the sampling position forms an angle with the conveyor channel (25) as well as contacts this by its one, open end in such a manner that the upper exit (43) of the conveyor channel (25) opens into the chute (91).

3. Feeding equipment according to claim 1 or 2, characterised thereby that the longitudinal direction of the or each chute (91) in each of its said selectable positions is parallel to a vertical plane extending in the longitudinal direction of the associated conveyor channel (25), that there are reference vertical planes (141, 143, 145) which are parallel to one another and at right angles to the vertical plane and which extend through the respective top end of the chute (91) in the different positions thereof, that the or each chute (91) extends in the working setting downwardly from above on the one side of the relevant reference vertical plane (141) and that the chute (91) extends in the or each other of its said selectable positions downwardly from above on the side of the respective reference vertical plane (143, 145) remote from the said side of the reference vertical plane (141).

4. Feeding equipment according to one of claims 1 to 3, characterised thereby that the or each chute (91) in the or each of said selectable position different from the working setting is approximately at right angles to the longitudinal direction of the conveyor channel (25), with which the chute (91) is connected.

5. Feeding equipment according to one of claims 1 to 4, wherein the or each material storage device (17) tapers downwardly at least in its lower region and has there a sloping wall member (17a), characterised thereby that the or each conveyor channel (25) is fastened to the underside of the sloping wall member (17a) of the associated material storage device (17) and inclined parallel to this.

6. Feeding equipment according to one of claims 1 to 5, characterised thereby that the or each chute (91) is straight over its entire length as well as of rigid shape and is open at least in the region of the upper exit (43) at its side which in the working position is disposed at the top in the cross-section and faces the associated conveyor channel (25).

7. Feeding equipment according to one of claims 1 to 6, characterised thereby, that the or each conveyor channel (25) and chute (91) is provided with suspension members (27a, 27b) and hook-in members (95, 97, 101), respectively, which enable the detachable suspension of the or each chute (91) in the said positions, and that the suspension members (27a, 27b) and hook-in members (95, 97, 101) are constructed in such a manner that the or each chute (91) suspended at the associated conveyor channel (25) can be hung up by upwardly directed displacement of this along the associated conveyor channel (25).

8. Feeding equipment according to one of claims 1 to 7, wherein at least two material storage devices (17) and a respective conveyor channel (25) as well as chute (91) associated with each of these are present, characterised thereby that the conveyor channels (25) diverge upwardly and that the chutes (91) converge downwardly in their working position and diverge downwardly in the or each said selectable position.

9. Feeding equipment according to one of claims 1 to 8, characterised thereby that the conveyor member (57) is constructed in such a manner that, in each of its possible positions and with open lower exit (45), bulk material (121) can get from entrance (41) to the lower exit (45) as well as through this under the effect of gravity.

10. Feeding equipment according to one of the claims 1 to 9, characterised thereby that the locking member (47) is displaceable along the conveyor channel (25) and that detent means (51) are present in order to releasably detent the locking member (47) in two settings in which it blocks or frees the second exit (45).

11. Feeding equipment according to one of the claims 1 to 10, wherein the or each conveyor member (57) comprises a helical member (57b), which encloses an axis (55) extending in the longitudinal direction of the associated conveyor channel (25) as well as is rotatable about the axis (55) by a drive device (83) having a motor, characterised thereby that the or each conveyor member (57) is mounted above the upper end of the helical member (57b) in a bearing device (61), which is detachably mounted at a support (31), which is arranged at the upper end of the conveyor channel (25), in such a manner that it is withdrawable from the conveyor channel (25) and the support (31), together with the conveyor member (57) which is mounts, by obliquely upwardly directed pulling of the latter out of the conveyor channel, wherein the bearing device (61) has at least one locking member (67), which is pivotable about the axis (55), locks the bearing device (61) in a pivot position with the support (31) as well as secures it against axial displacements, and in another pivot position enables the withdrawal of this bearing device (61) from the support (31).

12. Feeding equipment according to one of the claims 1 to 11, wherein the or each conveyor member (57) comprises a helical member (57b), which encloses an axis (55) extending in the longitudinal direction of the associated conveyor channel (25), characterised thereby that present for the or each material storage device (17) is at least one load-measuring transducer (15) and a drive device (83), which has an electric motor, for the driving of the conveyor member (57) and that the or each load-measuring transducer (15) and motor are electrically connected with a regulating device (111) which is constructed in order to regulate by unit time the bulk material quantity conveyed by the or each conveyor member (57).

## Revendications

1. Dispositif de dosage pour le dosage d'au moins un produit en vrac (121), pourvu d'au moins un magasin (17), d'un conduit d'acheminement correspondant (25) se trouvant au-dessous de celui-ci, qui est pourvu d'une entrée (41) communiquant avec l'intérieur du magasin correspondant (17) et d'une sortie pour le produit en vrac (121), renferme un organe convoyeur (57), et est relié à un conduit en goulotte (91) pour évacuer le produit en vrac, caractérisé en ce que le conduit d'acheminement (25), ou chaque conduit d'acheminement selon le cas, est incliné vers le haut depuis son entrée (41) jusqu'à une sortie supérieure (43) et est pourvu encore d'une sortie (45), inférieure, située au niveau de son extrémité inférieure et au-dessous de l'entrée (41), et obturable au moyen d'un organe d'obturation (47) mobile, en ce que le ou chaque conduit en goulotte (91), peut être relié de manière amovible au conduit d'acheminement correspondant (25) dans une position de travail et dans une position de vidage, au choix, et que, dans la position de travail, il est disposé le long de la délimitation du conduit d'acheminement (25) se trouvant, en coupe transversale, dessous, en ce que, dans la position de travail, la sortie supérieure (43) du conduit d'acheminement (25) débouche dans le conduit en goulotte (91) et que, dans la position de vidage, ce dernier forme un angle avec le conduit d'acheminement (25) et est contigu à celui-ci par son extrémité ouverte, de telle sorte que la sortie inférieure (45) du conduit d'acheminement (25) débouche dans le conduit en goulotte (91).

2. Dispositif de dosage selon la revendication 1, caractérisé en ce que le ou chaque conduit en goulotte (91) peut être relié encore de manière amovible au conduit d'acheminement correspondant (25) dans une position de prélèvement d'échantillons et forme, dans cette position, un angle avec le conduit d'acheminement (25), de même qu'il est contigu à celui-ci par son extrémité ouverte, de telle sorte que la sortie supérieure (43) du conduit d'acheminement (25) débouche dans le conduit en goulotte (91).

3. Dispositif de dosage selon la revendication 1 ou 2, caractérisé en ce que la direction longitudinale du ou de chaque conduit en goulotte (91) est, dans chacune de ses positions citées sélectionnnées, parallèle à un plan vertical passant dans la direction longitudinale du conduit d'acheminement correspondant (25), en ce qu'il y a des plans verticaux de référence (141, 143, 145) perpendiculaires à ce plan vertical et parallèles les uns aux autres, traversant l'extrémité du ou de chaque conduit en goulotte (91) située à chaque fois, dans ses différentes positions, en haut, en ce que, dans la position de travail, le ou chaque conduit en goulotte (91) se dirige de haut en bas sur un côté du plan vertical de référence (141) considéré et que, dans l'autre ou dans chacune de ces autres positions citées sélectionnées, le conduit en goulotte (91) se dirige de haut en bas sur le côté du plan vertical de référence respectif (143, 145) qui est détourné dudit côté. du plan vertical de référence (141).

4. Dispositif de dosage selon l'une des revendications 1 à 3, caractérisé en ce que, dans la ou dans chaque position citée sélectionnée différente de la position de travail, le ou chaque conduit en goulotte (91) est à peu près perpendiculaire à la direction longitudinale du conduit d'acheminement (25) auquel il est relié.

5. Dispositif de dosage selon l'une des revendications 1 à 4, dans lequel le ou chaque magasin (17) va en se rétrécissant vers le bas au moins dans sa partie inférieure et est pourvu à cet endroit d'une partie de paroi (17a) inclinée, caractérisé en ce que le ou chaque conduit d'acheminement (25) est fixé à la face inférieure de la partie de paroi inclinée (17a) du magasin correspondant (17) et est incliné dans un sens parallèle à celle-ci.

6. Dispositif de dosage selon l'une des revendications 1 à 5, caractérisé en ce que le ou chaque conduit en goulotte (91) est rectiligne et rigide sur toute sa longueur et que, au moins dans la zone de la sortie supérieure (43), il est ouvert sur son côté qui, dans la position de travail, se trouve, en coupe transversale, dessus, et qui est tourné vers le conduit d'acheminement correspondant (25).

7. Dispositif de dosage selon l'une des revendications 1 à 6, caractérisé en ce que le ou chaque conduit d'acheminement (25) et le ou chaque conduit en goulotte (91) sont pourvus, respectivement, de fixations d'accrochage (27a, 27b) et d'éléments d'accrochage (95, 97, 101) qui permettent de suspendre de manière amovible le ou chaque conduit en goulotte (91) dans lesdites positions, et en ce que les fixations d'accrochage (27a, 27b) et les éléments d'accrochage (95, 97, 101) sont conçus de telle manière que le ou chaque conduit en goulotte (91) accroché au conduit d'acheminement correspondant (25) peut être décroché de celui-ci par une poussée dirigée vers le haut le long de ce conduit d'acheminement (25).

8. Dispositif de dosage selon l'une des revendications 1 à 7, dans lequel on trouve au moins deux magasins (17) et, pour chacun d'eux, un conduit d'acheminement correspondant (25) ainsi qu'un conduit en goulotte (91), caractérisé en ce que les conduits d'acheminement (25) divergent vers le haut, et en ce que les conduits en goulotte (91) convergent vers le bas dans leur position de travail, et divergent vers le bas dans la ou chacune des autres positions citées sélectionnées.

9. Dispositif de dosage selon l'une des revendications 1 à 8, caractérisé en ce que l'organe convoyeur (57) est conçu de telle manière que, dans chacune de ses positions possibles, et la sortie inférieure (45) étant ouverte, du produit en vrac (121) puisse, sous l'effet de la force de pesanteur, circuler de l'entrée (41) jusqu'à la sortie (45) et passer à travers celle-ci.

10. Dispositif de dosage selon l'une des revendications 1 à 9, caractérisé en ce que l'organe d'obturation (47) peut être déplacé le long du conduit d'acheminement (25), et en ce que des moyens de verrouillage (51) existent, pour enclencher l'organe d'obturation (57) dans deux positions, dans lesquelles il obture ou libère, selon le cas, la deuxième sortie (45).

11. Dispositif de dosage selon l'une des revendications 1 à 10, dans lequel le ou chaque organe convoyeur (57) est pourvu d'une hélice (57b) qui entoure un axe (55) dirigé dans la direction longitudinale du conduit d'acheminement correspondant (25) et qui peut tourner autour de l'axe (55) à travers un mécanisme de commande (83) pourvu d'un moteur, caractérisé en ce que le ou chaque organe convoyeur est monté, au-dessus de l'extrémité supérieure de l'hélice (57b), dans un dispositif formant un palier (61) qui est fixé de manière amovible à un support (31) situé à l'extrémité supérieure du conduit d'acheminement (25), de telle sorte qu'il peut être retiré du conduit d'acheminement (25) et du support (31), avec l'organe convoyeur (57) qui y est logé, en tirant ce dernier de manière oblique vers le haut hors du conduit d'acheminement (25), le dispositif formant un palier (61) étant pourvu d'au moins un élément de verrouillage (67) pouvant tourner autour de l'axe (55), qui verrouille le dispositif formant un palier (61) au support (31) dans une position de pivotement et le protège contre des déplacements axiaux, et qui, dans une autre position de pivotement, permet de retirer ce dispositif formant un palier (61) du support (31).

12. Dispositif de dosage selon l'une des revendications 1 à 11, dans lequel le ou chaque organe convoyeur (57) est pourvu d'une hélice (57b) qui entoure un axe (55) dirigé dans la direction longitudinale du conduit d'acheminement correspondant (25), caractérisé en ce que le ou chaque magasin (17) est pourvu d'au moins un transformateur de mesure de charge (15) et d'un mécanisme de commande (83) pourvu d'un moteur électrique pour commander l'organe convoyeur (57), et en ce que le ou chaque transformateur de mesure de charge (15) et son moteur sont connectés par une liaison électrique à un dispositif de réglage (111) qui est conçu pour ajuster les quantités de produits en vrac délivrées par unité de temps par le ou chaque organe convoyeur (57).
